(19) Europäisches Patentamt / European Patent Office / Office européen des brevets

(11) **EP 1 617 675 B1**

(12) **EUROPEAN PATENT SPECIFICATION**

(45) Date of publication and mention
of the grant of the patent:
**15.10.2014 Bulletin 2014/42**

(51) Int Cl.:
***H04N 19/00*** *(2014.01)*

(21) Application number: **05105974.9**

(22) Date of filing: **30.06.2005**

(54) **Method and device for choosing a motion vector for the coding of a set of blocks**

Verfahren und Vorrichtung zur Bewegungsvektorauswahl für die Kodierung einer Blockmenge

Procédé et dispositif pour choisir un vecteur de mouvement pour le codage d'un ensemble de blocs

(84) Designated Contracting States:
**DE ES FR GB IT**

(30) Priority: **06.07.2004 FR 0451448**

(43) Date of publication of application:
**18.01.2006 Bulletin 2006/03**

(73) Proprietor: **Thomson Licensing**
**92130 Issy-les-Moulineaux (FR)**

(72) Inventors:
• **Ruellou, PIERRE**
**35410, Domloup (FR)**
• **Francois, Edouard**
**35890, Bourg des Comptes (FR)**
• **Salmon, Philippe**
**35250, Saint Sulpice la Foret (FR)**

(74) Representative: **Huchet, Anne et al**
**Technicolor**
**1, rue Jeanne d'Arc**
**92443 Issy-les-Moulineaux Cedex (FR)**

(56) References cited:
• **SUBRAMANIAN P ET AL: "Reduced-complexity rate-distortion optimization of multiresolution motion field and prediction residual" PROCEEDINGS. INTERNATIONAL CONFERENCE ON IMAGE PROCESSING (CAT. NO.97CB36144) IEEE COMPUT. SOC LOS ALAMITOS, CA, USA, vol. 2, 26 October 1997 (1997-10-26), - 29 October 1997 (1997-10-29) pages 799-802 vol.2, XP002317431 ISBN: 0-8186-8183-7**
• **HAO BI ET AL: "Motion compensated transform coding of video using hierarchical displacement field and global rate-distortion optimization" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. VOL. 1, 16 September 1996 (1996-09-16), pages 267-270, XP010202382 ISBN: 0-7803-3259-8**
• **KOSSENTINI F ET AL: "PREDICTIVE RD OPTIMIZED MOTION ESTIMATION FOR VERY LOW BIT-RATE CODING" IEEE JOURNAL ON SELECTED AREAS IN COMMUNICATIONS, IEEE INC. NEW YORK, US, vol. 15, no. 9, December 1997 (1997-12), pages 1752-1763, XP000726013 ISSN: 0733-8716**
• **SCHWARZ H ET AL: "An Improved H.26L Coder Using Lagrangian Coder Control" ITU TELECOMMUNICATIONS STANDARDIZATION SECTOR STUDY GROUP 16, XX, XX, 18 October 2001 (2001-10-18), pages 1-8, XP002268624**

**Description**

The present invention relates to a method of hierarchical estimation of motion intended for the realm of image compression. This method makes it possible to choose a motion vector for a set of blocks in an image divided into blocks and exhibiting a so-called origin resolution.

The context of the invention is compression, in particular video compression, based on blockwise coding schemes, of MPEG-2, MPEG-4 type, part 2 or 10. These compression schemes operate on basic entities called macroblocks. In what follows, the term block may designate groups of any size of smaller blocks and hence in particular may designate macroblocks. However the invention may also be implemented in any video coding scheme using a motion vector field described by blocks.

In the realm of image compression, the Inter motion vector is aimed at harnessing the temporal redundancies of the video signal so as to compress it. The principle is therefore to predict the content of an image then to code only the error made in this prediction. The MPEG standards implement techniques of motion compensation in the image so as to optimize the decrease in temporal redundancies. Several steps are then to be distinguished: motion estimation, motion compensation and coding. As indicated hereinabove, the invention relates to motion estimation.

As a general rule, the motion in a video sequence cannot be modelled by a single vector. With each macroblock of the image is therefore associated a motion cue. The motion estimation operation makes it possible to determine the macroblock in the reference image which most resembles the macroblock to be coded.

This search algorithm is not standardized and its efficiency has a fundamental influence on the performance of the coder and also on its complexity.

The procedure most used is block-matching: the macroblock is compared with the macroblocks pointed at by the vectors tested in the reference image search zone. The vector is, in the case of the MPEG-2 norm, determined with a precision of half a pixel. The selection is made on the macroblock minimizing the difference from the point of view of the sum of the absolute values of the differences between the values of pixels, hereinafter dubbed distortion, and possibly of the cost of coding of the vector field. Such procedures are expensive in computation time since the search is made over the entire image at the original resolution. Moreover, the estimation process being mono-resolution, it generally converges to a vector field which corresponds to a local minimum of the function affording the distortion/coding cost compromise.

The present invention proposes a method of motion estimation which does not give rise to the defects mentioned hereinabove. Thus, a method of motion estimation according to the invention makes it possible to obtain a motion estimate requiring less calculation time and at less coding cost since a minimum closer to the global minimum is achieved.

The present invention relates to a method of hierarchical estimation of motion intended to choose a motion vector from among a plurality of motion vectors for a set of blocks of an origin image divided into blocks, the said method comprising a step of calculation of an energy function over the set of blocks for each of the motion vectors, the said step of calculation implementing a substep of calculation of a Lagrangian constraint adapted to the size of the set of blocks, and a step of choice of a motion vector minimizing the energy function over the said set of blocks.

Specifically, the broad-scale approach as proposed by the invention makes it possible to undertake a more global analysis, by undertaking an analysis on a set of blocks. The use of a Lagrangian constraint adapted to the size of the set of blocks makes it possible to reduce the amount of calculation.

According to an embodiment of the invention, the step of calculation implements a substep of calculation of the distortion over an image of lower resolution corresponding to the set of blocks and obtained with the aid of a substep of reduction of the resolution on the basis of the origin image.

The broad-scale approach, supplemented with a multi-resolution approach, makes it possible to further reduce the calculations since the distortion is calculated only over an image of lower resolution.

In another embodiment, coefficients used in the substep of reduction of the resolution are used in the substep of calculation of the Lagrangian constraint.

In this case, the Lagrangian constraint is then adapted as a function of the characteristics of the filters used to generate the image of lower resolution.

According to an embodiment of the invention, the method is iteratively repeated on a series of sets of blocks of decreasing size, by giving as motion vectors to the sets of neighbouring blocks of a set of blocks termed current the motion vectors chosen at the previous iteration in sets of blocks of greater size including the sets of neighbouring blocks.

This multi-scale, iterative hierarchical approach makes it possible to reach a local minimum closer to the global minimum than is made possible with a mono-scale and/or mono-resolution approach and hence, in particular, to optimize the cost of coding over the set of blocks. Specifically, the iteration of the invention over sets of blocks of smaller and smaller sizes makes it possible to optimize the determination of a minimum over the whole of the image. The obtaining of a local minimum is then less probable.

According to an embodiment of the invention, the decreasing sizes of the sets of blocks are $2^n*2^n$ blocks, with an iteration on $n$.

This embodiment is especially useful for MPEG coding where the blocks are in particular grouped into macroblocks, which may also be grouped together, in particular into groups of $2^n \times 2^n$ blocks. For example, the set of starting blocks of the iteration may be of the largest possible size $2^n$ of blocks in the image to be coded, the next set in the series being of size $2^{n-1}$ and so on and so forth. According to the method of the invention, a motion vector is then chosen for the set of size $2^n$ which corresponds to four sets of size $2^{n-1}$ of the next iteration. Then a motion vector is determined according to the invention for each set of size $2^{n-1}$. These sets are traversed thereafter by a conventional scan, for example from left to right and from top to bottom. Then it is the turn of the sets of size $2^{n-2}$ and so on and so forth.

According to an embodiment of the invention, the size of the image obtained with the aid of the substep of reduction of the resolution is of the size of the following set of blocks in the series of sets of blocks.

The invention also relates to a device for implementing the method as described earlier.

The invention also relates to a compressed image obtained by implementing a method according to the invention.

Other characteristics and advantages of the present invention will become apparent on reading the description of various embodiments, the description being given with reference to the appended drawings in which:

Fig. 1 is a diagram of a device according to the invention.

Fig. 2a to Fig. 2c present a multi-scale structure.

Fig. 3 illustrates the manner of operation of the invention for a set of blocks B.

Fig. 4a to Fig. 4c present a multi-resolution structure.

Figure 5 represents the blocks neighbouring a block for the calculation of a coding cost.

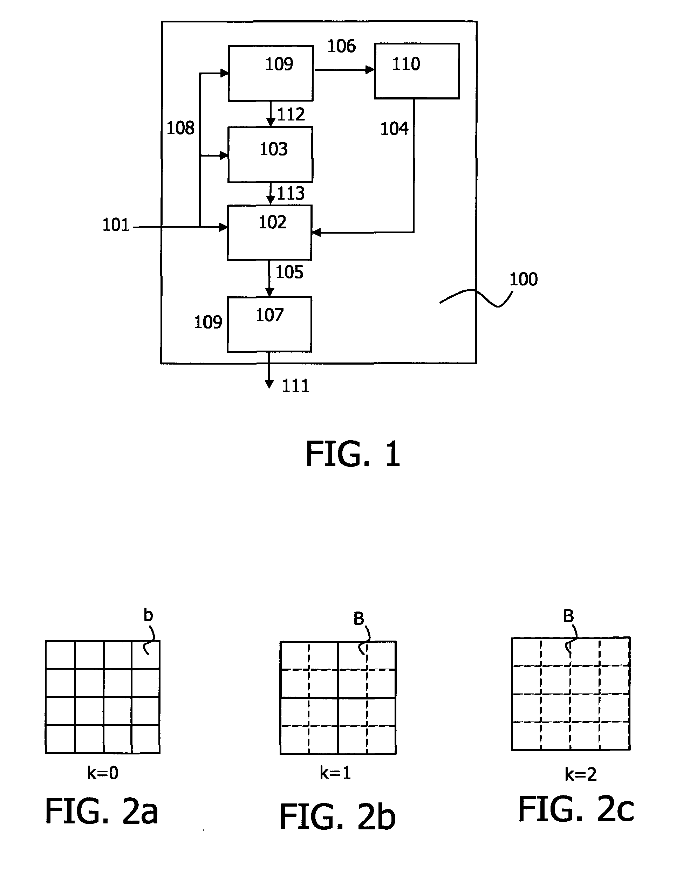

As represented in Figure 1, a device 100 according to the invention includes a calculation module 102 for calculating an energy function 105 over a set of blocks 108 of an origin image 101 for each of the motion vectors. The energy function, represented by a single reference 105 for reasons of clarity, is however calculated for several motion vectors for one and the same set of blocks. Thus, as many values of the energy function, referenced 105, are stored as motion vectors that are evaluated.

Specifically, in order to produce the motion estimate, one therefore seeks to identify a motion field per set of blocks 108. For each set of blocks 108 of the current image, one seeks to identify a motion vector which affords a good prediction of the current set of blocks 108 while limiting its coding cost. To do this, an energy function 105 is determined, which is conventionally decomposed into two terms: a term related to the measure of the quality of temporal prediction and a term related to the cost of coding of the motion.

Conventionally, for a block b of the current image, the energy related to the measure of the quality of temporal prediction is based on the motion compensation error. We use the sum of the absolute values of the differences, termed SAD, which is calculated thus:

$$SAD_b(u) = \sum \left| I_{current(x,y)} - I_{ref}(x + u_x, y + u_y) \right|$$

where $I_{current}$ is the current image, $I_{ref}$ is the reference image, $(x, y)$ the address of the pixel, $(u_x, u_y)$ the components of the motion vector u.

The energy related to the coding cost is determined, in accordance with the MPEG norm, according to the following equation:

$$C_b(u) = \lambda.R(u - m_b)$$

with $\lambda$ Lagrangian weighting coefficient, R(...) the coding cost function for a vector, $m_b$, the motion vector serving as prediction for the coding of the vector of block b. $m_b$ may, for example, be calculated as the median vector of the three vectors which surround it.

The motion estimation problem is thus tackled as a problem of minimizing the function:

$$\sum_{b \subset I_{current}} (SAD_b(u) + C_b(u))$$

The calculation over the totality of the blocks requires a large number of calculations and, as set forth earlier, does not make it possible to reach a minimum close to the global minimum, in particular for the coding cost.

To avoid these drawbacks, the invention uses a multi-scale approach. As illustrated in Figures 2b and 2c, at a scale k>0, a set of blocks B contains $2^k \times 2^k$ blocks b $N \times N$ of scale k=0.

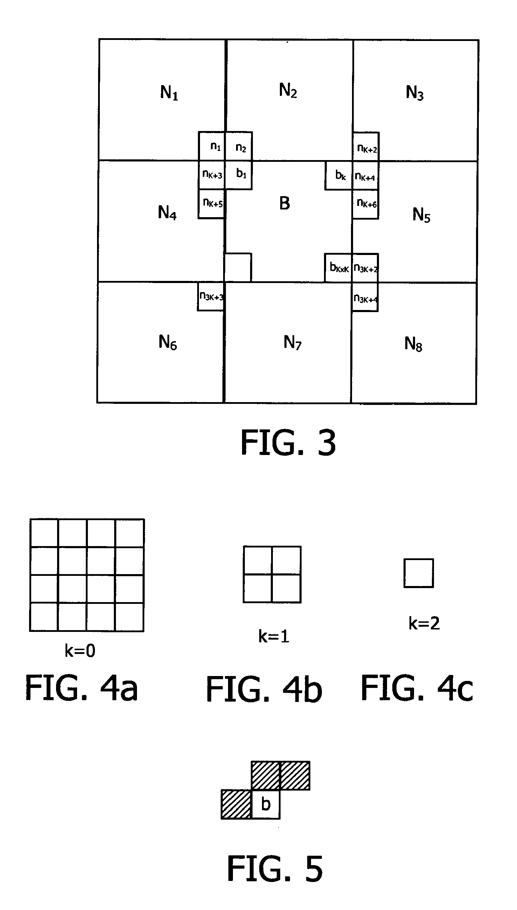

As represented in Figure 3, the neighbours of the set of blocks B are denoted $N_i$ (i=1, ..., 8) at a given scale k. The sets of blocks B and Ni each possess a vector. The blocks of size $N \times N$ at the scale 0 of B are denoted bi, and its neighbouring blocks of size $N \times N$ at the scale 0 are denoted $n_i$.

According to the invention, the minimization is performed for the set of blocks and is advantageously followed by other choices of motion vectors at smaller scales, thus minimizations of an energy function are performed from the highest scale to the scale 0. The motion field obtained at a given scale then serves as initialization for the next scale. To do the minimization on an image at a given scale, the principle consists in taking the sets of blocks one by one, for example with a scan from left to right and from top to bottom, and of choosing for each set of blocks the vector which affords the value of the energy function which is a minimum.

Assigning a vector u to a set of blocks has an impact on the set of blocks itself and also on the neighbouring sets of blocks on account of the use of a motion vector of the neighbouring sets of blocks for the coding of the motion vector of a given set of blocks. It is therefore the role of the calculation of the energy function to make it possible to evaluate this impact and to minimize it.

On the one hand, the term corresponding to the cost of coding of the motion in the energy function is dubbed contextual energy in what follows. This energy takes into account the coding cost for the set of blocks considered and also for its neighbours.

Thus, referring to Figure 3, the contextual energy of a set of blocks B for a vector u is equal to

$$EC_B^k(u) = \sum_{i=1}^{KxK} C_{b_i}(u) + \sum_{i=1}^{4K+4} C_{n_i}(V_{n_i} / u)$$

With $V_n$ the vector of block n

$C_b$ (x), the coding cost for block b $\subset$ B of the vector x which is expressed in the following form $C_b(x) = \lambda.R(x-m_b)$

$C_n(x/u)$, the coding cost for block n $\subset$ N of the vector x knowing that the vector of the set of blocks B is u, which is expressed in the following form $C_n(x/u) = \lambda.R(x-m_n(u))$ with $m_n(u)$ the predictor motion vector of block n knowing that the vector of the set of blocks B is u.

For blocks $b_{K+1}$ and $b_{K \times K}$ included in the set of blocks B, the motion vector is u. Hence for these blocks $C_b(u) = \lambda.R(0)$ is independent of u.

For blocks $n_1$ to $n_{3K+2}$ and $n_{4K+4}$, the motion vector is independent of u. Specifically, either their three neighbouring blocks, as defined in the standard and illustrated hatched in Figure 5 for a block b, do not contain u, or one contains u and the other two, one and the same vector v. Hence the median of the three, by definition the motion vector, corresponds to v.

We thus obtain the following result:

$$EC_B^k(u) = \gamma + \sum_{i=1}^{K} C_{b_i}(u) + \sum_{i=3K+3}^{4K+3} C_{n_i}(V_{n_i} / u)$$

with $\gamma$ independent of u.

The terms of the equation may be made explicit as follows:

$$\begin{cases} C_{b_i}(u) = \lambda.R(u - V_{N_2}) \\ \qquad\qquad \vdots \\ C_{b_{K-1}}(u) = \lambda.R(u - V_{N_2}) \\ C_{b_K}(u) = \lambda.R(u - med(u, V_{N_2}, V_{N_3})) \end{cases}$$

$$\begin{cases} C_{n_{3K+3}}(u) = \lambda.R(V_{N_6} - med(V_{N_6}, V_{N_4}, u)) \\ C_{n_{3K+4}}(u) = \lambda.R(V_{N_7} - u) \\ \qquad\qquad \vdots \\ C_{n_{4K+2}}(u) = \lambda.R(V_{N_7} - u) \\ C_{n_{4K+3}}(u) = \lambda.R(V_{N_7} - med(V_{N_7}, u, V_{N_5})) \end{cases}$$

Finally this gives

$$EC_B^k(u) = \gamma + \lambda.\begin{bmatrix} (K-1).[R(u - V_{N_2}) + R(V_{N_7} - u)] + \\ R(u - med(u, V_{N_2}, V_{N_3})) + \\ R(V_{N_6} - med(V_{N_6}, V_{N_4}, u)) + \\ R(V_{N_7} - med(V_{N_7}, u, V_{N_5})) \end{bmatrix} = \gamma + \lambda.ec_B^k(u)$$

Thus, regardless of the scale of the set of blocks B, only five values need to be calculated in addition to the coefficient $\lambda$ which is calculated just once for each scale since it is independent of the vector u. It is not necessary to calculate $\gamma$ since this term is independent of u. Hence, regardless of the motion vector tested, only the right-hand part of the sum of the above equation varies. Thus, the invention makes it possible to reduce the amount of calculations to be performed. Thus, the calculation of the energy related to the coding of the motion vectors implements a calculation of a Lagrangian constraint $\lambda$ determined for the size of the set of blocks, that is to say at the scale considered.

For the smallest scale, namely k=0, corresponding to a single block, the contextual energy is expressed in the following form:

$$EC_B^0(u) = \lambda.\begin{bmatrix} R(u - med(V_{N_4}, V_{N_2}, V_{N_3})) + \\ R(V_{N_5} - med(u, V_{N_3}, V_{N_9})) + \\ R(V_{N_6} - med(V_{N_{12}}, V_{N_4}, u)) + \\ R(V_{N_7} - med(V_{N_{76}}, u, V_{N_5})) \end{bmatrix} = \lambda.ec_B^0(u)$$

On the other hand, in theory, the energy related to the motion compensation error is the sum of the SADs over all the blocks of scale 0 of the set of blocks B. In order to decrease the calculational burden, the invention carries out a multi-resolution approach. An image of different resolution from the origin resolution is then constructed for the current image and for the reference image. It is noted that when the invention is iteratively repeated over a plurality of resolutions, a multi-resolution pyramid of images is constructed. As illustrated in Figure 4, in this pyramid, a block of size N×N at level k in Figure 4b or in Figure 4c corresponds to a group of $2^k \times 2^k$ blocks of size N×N at level 0 in Figure 4a. Hence an N×N block of scale k may be matched with a set of blocks of scale 0.

In order to implement the calculation of the distortion over different resolution images, the calculation module 102 is partnered with a calculation submodule 110 for calculating the distortion 104 over an image 106 corresponding to the set of blocks 108 and obtained with the aid of the action of a submodule 109 for reducing the resolution on the basis of the origin image 101.

The image of lower resolution 106 is, for example, obtained by a low-pass filtering of at least the set of blocks 108 which arises from the image 101 of origin resolution then a subsampling by a factor 2. Thus, for example, a block of size N×N in the image of lower resolution corresponds to a set 108 of blocks of size NxN in the image of origin resolution 101.

Specifically, as illustrated in Figure 4, this case corresponds to the case where the reduction in resolution is such that the size of the set of blocks 108 is reduced through the reduction in resolution in such a way as to be equal to the next size in a series of sizes of sets of blocks. Such a size series is used to iteratively repeat a method according to the invention.

The invention proposes to free up a link between the distortions obtained independently for the two resolutions so as to use the calculation on the image at the lower resolution for the calculation at the origin resolution.

With regard to the sums of the absolute values of the differences, an approximation relation is thus discovered according to the invention between the SAD over a block of size N×N of the image of lower resolution, this block corresponding to a set of blocks in the image of origin resolution, and the sum of the SADs of the blocks of size N×N in the image of origin resolution.

It is considered that the image signal x serving in the calculation of the SAD is considered to be an uncorrelated signal distributed according to a Gaussian.

$$x \sim N(\mu, \sigma)$$

The signal y resulting from the low-pass filtering, assumed linear, then from the subsampling of this signal gives a signal which is uncorrelated with the following statistical properties:

$$y \sim N\left(\mu, \sqrt{\sum_{i,j} \alpha^2(i,j)}\, \sigma\right)$$

where $\alpha(i,j)$ constitute the coefficients of the low-pass filter used to construct the image of lower resolution. By way of example, the filter may be as follows:

$$\alpha(0,0) = 0.0625 \quad \alpha(0,1) = 0.125 \quad \alpha(0,2) = 0.0625$$

$$\alpha(1,0) = 0.125 \quad \alpha(1,1) = 0.25 \quad \alpha(1,2) = 0.125$$

$$\alpha(2,0) = 0.0625 \quad \alpha(2,1) = 0.125 \quad \alpha(2,2) = 0.0625$$

The SAD of a block of a given resolution *k* may then be considered to be related to the SAD of the corresponding blocks of the higher resolution *k-1* by the following formula:

$$\left(4\sqrt{\sum_{i,j} \alpha^2(i,j)}\right) SAD^k\left(u/2^k\right) \approx \sum_m SAD_m^{k-1}\left(u/2^{k-1}\right)$$

Applied iteratively, the calculation of the SAD over a block of size N×N on the image of lower resolution then makes it possible to approximate the sum of the SADs of the blocks of size N×N corresponding in the image of origin size according to the following formula:

$$\left(4\sqrt{\sum_{i,j}\alpha^2(i,j)}\right)^k .SAD^k\left(u/2^k\right)\approx\sum_m SAD_m^0(u)$$

where SAD° is the SAD of the blocks over the image of origin resolution.

The factor 4 stems from the fact that a block of a given level has four corresponding ones in the lower level.

The device includes a module for choosing a first motion vector minimizing the energy function, obtained by calculating the sum of the energies corresponding to the cost of coding of the motion and to the motion compensation error over the said set of blocks.

The vector u for the set of blocks B is then the motion vector which minimizes the function

$$\left(4\sqrt{\sum_{i,j}\alpha^2(i,j)}\right)^k .SAD^k\left(u/2^k\right)+\lambda.ec_B^k(u)$$

Specifically, the search for the optimum vector will therefore consist in searching for the vector minimizing the function:

$$SAD^k\left(u/2^k\right)+\lambda_k.ec_B^k(u)$$

with

$$\lambda_k = \frac{\lambda}{\left(4\sqrt{\sum_{i,j}\alpha^2(i,j)}\right)^k}$$

Thus a Lagrangian constraint 113, corresponding to $\lambda_k$, is calculated in a calculation submodule 103 which advantageously receives the coefficients 112 of the filters serving to generate the image of lower resolution 106. This new form of the Lagrangian constraint 113 adapted to the size of the set of blocks thus allows a great simplification of the calculations while ensuring the reaching of a minimum close to the global minimum over the image since the minimization of the energy functions can firstly be carried out at a large scale, then, when the method according to the invention is iteratively repeated over several sizes of sets of blocks, over a grid of smaller and smaller size. According to the invention, the distortion is advantageously calculated for each size of set of blocks over an image of the set of blocks of lower resolution. This makes it possible to considerably reduce the amount of calculation.

Then, the invention makes it possible to undertake the optimization on the basis of the coarsest scale by iteratively repeating the method according to the invention over a series of decreasing sizes of sets of blocks, for example of size $2^n \times 2^n$ with an iteration on n. A causal scan is used to traverse each of the sets.

The invention is not limited to the embodiments described and the person skilled in the art will recognize the existence of various alternative embodiments.

## Claims

1. Method of hierarchical estimation of motion intended to choose a motion vector (111) from among a plurality of motion vectors for a set of blocks (108) of an origin image (101) divided into blocks, the said method comprising a step of calculation (102) of an energy function (105) over the set of blocks (108) for each of the motion vectors, the said step of calculation (102) implementing a substep of calculation (103) of a Lagrangian constraint (113) adapted to the size of the set of blocks (108), a step of choice (107) of a motion vector (111) minimizing the energy function (105) over the said set of blocks (108),

   - the step of calculation (102) being partnered with a calculation substep (110) for calculating a distortion (104) over an image (106) corresponding to the set of blocks (108) and obtained with the aid of a substep of reduction of the resolution (109) on the basis of the origin image (101), and
   - iteratively repeating on a series of sets of blocks of decreasing size, by giving as motion vectors to the sets of neighbouring blocks of a set of blocks termed current the motion vectors chosen at the previous iteration in sets of blocks of greater size including the sets of neighbouring blocks.

2. Method according to Claim 1, in which coefficients (112) used in the substep of reduction of the resolution (1 09) are used in the substep of calculation (1 03) of the Lagrangian constraint (113).

3. Method according to Claim 1 or 2, in which the decreasing sizes of the sets of blocks (1 08) are 2n*2n blocks, with an iteration on n.

4. Method according to one of Claims 1 to 3, in which the size of the image (106) obtained with the aid of the substep of reduction of the resolution (1 09) is of the size of the following set of blocks in the series of sets of blocks.

5. Method of coding images, **characterized in that** it includes a phase of estimation of hierarchical motion according to the method of Claim 1.

6. Device (100) for a hierarchical estimation of motion intended to choose a motion vector (111) from among a plurality of motion vectors for a set of blocks (108) of an origin image (101) divided into blocks, the said device (101) comprising a calculation module (102) for calculating an energy function (105) over the set of blocks (108) for each of the motion vectors, the said calculation module (102) implementing a calculation submodule (103) for calculating a Lagrangian constraint (113) adapted to the size of the set of blocks (108), a module (107) for choosing a motion vector (111) minimizing the energy function (105) over the said set of blocks (108),

   - the calculation module (102) being partnered with a calculation module (110) for calculating a distortion (104) over an image (106) corresponding to the set of blocks (108) and obtained with the aid of a submodule (109) for reducing the resolution on the basis of the origin image (101), and
   - means for iteratively repeating on a series of sets of blocks of decreasing size, by giving as motion vectors to the sets of neighbouring blocks of a set of blocks termed current the motion vectors chosen at the previous iteration in sets of blocks of greater size including the sets of neighbouring blocks.

7. Device according to Claim 6, in which the decreasing sizes of the sets of blocks (108) are 2n*2n blocks, with an iteration on n.

8. Device according to one of Claims 6 and 7, in which the size of the image (106) obtained in the submodule for reducing the resolution (109) is of the size of the following set of blocks in the series of sets of blocks.

## Patentansprüche

1. Verfahren zur hierarchischen Schätzung von Bewegung, das dafür bestimmt ist, unter mehreren Bewegungsvektoren für eine Menge von Blöcken (108) eines in Blöcke geteilten Ursprungsbilds (101) einen Bewegungsvektor (111) zu wählen, wobei das Verfahren einen Schritt der Berechnung (102) einer Energiefunktion (105) über die Menge von Blöcken (108) für jeden der Bewegungsvektoren, wobei der Schritt der Berechnung (102) einen Teilschritt der Berechnung (103) einer an die Größe der Menge von Blöcken (108) angepassten Lagrange'schen Nebenbedingung (113) implementiert, einen Schritt der Wahl (107) eines Bewegungsvektors (111), der die Energiefunktion (105) über die Menge von Blöcken (108) minimiert, umfasst,

- wobei mit dem Schritt der Berechnung (102) ein Berechnungsteilschritt (110) zum Berechnen einer Verzerrung (104) über ein Bild (106), das der Menge von Blöcken (108) entspricht und das mit Hilfe eines Teilschritts der Verringerung der Auflösung (109) auf der Grundlage des Ursprungsbilds (101) erhalten wird, assoziiert ist, und
- iteratives Wiederholen an einer Folge von Mengen von Blöcken fallender Größe, indem den Mengen von Nachbarblöcken einer Menge von Blöcken, die als gegenwärtig bezeichnet werden, diejenigen Bewegungsvektoren als Bewegungsvektoren gegeben werden, die in der vorhergehenden Iteration in Mengen von Blöcken mit größerer Größe, die die Mengen von Nachbarblöcken enthielten, gewählt wurden.

2. Verfahren nach Anspruch 1, in dem Koeffizienten (112), die in dem Teilschritt der Verringerung der Auflösung (109) verwendet werden, in dem Teilschritt der Berechnung (103) der Lagrange'schen Nebenbedingung (113) verwendet werden.

3. Verfahren nach Anspruch 1 oder 2, in dem die fallenden Größen der Mengen von Blöcken (108) 2n × 2n-Blöcke mit einer Iteration in n sind.

4. Verfahren nach einem der Ansprüche 1 bis 3, in dem die Größe des mit Hilfe des Teilschritts der Verringerung der Auflösung (109) erhaltenen Bilds (106) von der Größe der folgenden Menge von Blöcken in der Folge von Mengen von Blöcken ist.

5. Verfahren zum Codieren von Bildern, **dadurch gekennzeichnet, dass** es eine Phase der Schätzung hierarchischer Bewegung in Übereinstimmung mit dem Verfahren nach Anspruch 1 enthält.

6. Vorrichtung (100) für eine hierarchische Schätzung der Bewegung, die dafür bestimmt ist, unter mehreren Bewegungsvektoren für eine Menge von Blöcken (108) eines in Blöcke geteilten Ursprungsbilds (101) einen Bewegungsvektor (111) zu wählen, wobei die Vorrichtung (100) ein Berechnungsmodul (102) zum Berechnen einer Energiefunktion (105) über die Menge von Blöcken (108) für jeden der Bewegungsvektoren, wobei das Berechnungsmodul (102) ein Berechnungsteilmodul (103) zum Berechnen einer an die Größe der Menge von Blöcken (108) angepassten Lagrange'schen Nebenbedingung (113) implementiert, ein Modul (107) zum Wählen eines Bewegungsvektors (111), der die Energiefunktion (105) über die Menge von Blöcken (108) minimiert, umfasst,

- wobei mit dem Berechnungsmodul (102) ein Berechnungsmodul (110) zum Berechnen einer Verzerrung (104) über ein Bild (106), das der Menge von Blöcken (108) entspricht und das mit Hilfe eines Teilmoduls (109) zum Verringern der Auflösung auf der Grundlage des Ursprungsbilds (101) erhalten wird, assoziiert ist, und
- ein Mittel zum iterativen Wiederholen an einer Folge von Mengen von Blöcken mit fallender Größe, indem den Mengen von Nachbarblöcken einer Menge von Blöcken, die als gegenwärtig bezeichnet werden, diejenigen Bewegungsvektoren als Bewegungsvektoren gegeben werden, die in der vorhergehenden Iteration in Mengen von Blöcken mit größerer Größe, die die Mengen von Nachbarblöcken enthielten, gewählt wurden.

7. Vorrichtung nach Anspruch 6, in der die fallenden Größen der Mengen von Blöcken (108) 2n × 2n-Blöcke mit einer Iteration in n sind.

8. Vorrichtung nach einem der Ansprüche 6 und 7, in der die Größe des in dem Teilmodul zur Verringerung der Auflösung (109) erhaltenen Bilds (106) von der Größe der folgenden Menge von Blöcken in der Folge von Mengen von Blöcken ist.

## Revendications

1. Procédé d'estimation hiérarchique de mouvement destiné à choisir un vecteur de mouvement (111) parmi une pluralité de vecteurs de mouvement pour un ensemble de blocs (108) d'une image d'origine (101) divisée en blocs, ledit procédé comprenant une étape de calcul (102) d'une fonction d'énergie (105) sur l'ensemble des blocs (108) pour chacun des vecteurs de mouvement, ladite étape de calcul (102) mettant en oeuvre une sous-étape de calcul (103) d'une contrainte de Lagrange (113) adaptée à la taille de l'ensemble de blocs (108), une étape de choix (107) d'un vecteur de mouvement (111) réduisant au minimum la fonction d'énergie (105) sur ledit ensemble de blocs (108),

- l'étape de calcul (102) est accompagnée d'une sous-étape de calcul (110) pour le calcul d'une distorsion (104) d'une image (106) correspondant à l'ensemble de blocs (108) et obtenue avec l'aide d'une sous-étape de réduction de la résolution (109) sur la base de l'image d'origine (101), et

- la répétition itérative d'une série d'ensembles de blocs de taille décroissante, en donnant en tant que vecteurs de mouvement aux ensembles de blocs appelés actuels, les vecteurs de mouvement choisis lors de l'itération précédente en ensembles de blocs de taille supérieure incluant les ensembles de blocs voisins.

2. Procédé selon la revendication 1, dans lequel les coefficients (112) utilisés dans la sous-étape de réduction de la résolution (109) servent lors de la sous-étape de calcul (103) de la contrainte de Lagrange (113).

3. Procédé selon la revendication 1 ou 2, dans lequel les tailles décroissantes des ensembles de blocs (108) sont 2n*2n blocs, avec itération sur n.

4. Procédé selon l'une des revendications 1 à 3, dans lequel la taille de l'image (106) obtenue avec l'aide de la sous-étape de réduction de la résolution (109) équivaut à la taille de l'ensemble de blocs suivant dans la série d'ensembles de blocs.

5. Procédé de codage d'images, **caractérisé en ce qu'**il comprend une phase d'estimation de mouvement hiérarchique selon le procédé de la revendication 1.

6. Dispositif (100) d'estimation hiérarchique de mouvement destiné à choisir un vecteur de mouvement (111) parmi une pluralité de vecteurs de mouvement pour un ensemble de blocs (108) d'une image d'origine (101) divisée en blocs, ledit dispositif (101) comprenant un module de calcul (102) permettant de calculer une fonction d'énergie (105) sur l'ensemble des blocs (108) pour chacun des vecteurs de mouvement, ledit module de calcul (102) mettant en oeuvre un sous-module de calcul (103) pour calculer une contrainte de Lagrange (113) adaptée à la taille de l'ensemble des blocs (108), un module (107) permettant de choisir un vecteur de mouvement (111) réduisant au minimum la fonction d'énergie (105) sur ledit ensemble de blocs (108),

- le module de calcul (102) étant associé à un module de calcul (110) pour calculer une distorsion (104) d'une image (106) correspondant à l'ensemble de blocs (108) et obtenue à l'aide d'un sous-module (109) pour réduire la résolution sur la base de l'image d'origine (101), et
- un moyen de répétition itérative sur une série d'ensembles de blocs de taille décroissante, en donnant comme vecteurs de mouvement aux ensembles blocs voisins d'un ensemble de blocs appelé actuel, les vecteurs de mouvement choisis lors de la précédente itération dans les ensembles de blocs de taille supérieure comprenant les ensembles de blocs voisins.

7. Dispositif selon la revendication 6, dans lequel les tailles décroissantes des ensembles de blocs (108) sont 2n*2n blocs, avec itération sur n.

8. Dispositif selon l'une des revendications 6 et 7, dans lequel la taille de l'image (106) obtenue dans le sous-module pour réduction de la résolution (109) équivaut à la taille de l'ensemble de blocs suivants dans les séries d'ensembles de blocs.

FIG. 1

k=0

FIG. 2a

k=1

FIG. 2b

k=2

FIG. 2c

FIG. 3

k=0

FIG. 4a

k=1

FIG. 4b

k=2

FIG. 4c

FIG. 5